# EUROPÄISCHE PATENTSCHRIFT

(11) **EP 0 906 726 B1**
(45) Veröffentlichungstag und Bekanntmachung des Hinweises auf die Patenterteilung: **02.05.2003**
(21) Anmeldenummer: 98113020.6
(22) Anmeldetag: 13.07.1998
(51) Int. Cl.: A21D 13/08, A23G 3/00, A21C 15/02

(54) **Verfahren und Vorrichtung zum Herstellen einer Dauerbackware**
Method and device for production of long-life bakery
Méthode et dispositif pour produire une pâtisserie durable

(30) Priorität: 22.09.1997 DE 19741717
(43) Veröffentlichungstag der Anmeldung: 07.04.1999
(73) Patentinhaber: Bahlsen GmbH & Co. KG, 30163 Hannover (DE)
(72) Erfinder: Böcker, Jochen, 31655 Stadthagen (DE); Mahler, Reinhard, 31535 Neustadt (DE); Siefert, Uwe, 30455 Hannover (DE); Bretschneider, Uwe Dr., 30657 Hannover (DE); Rother, Rita, 28398 Bremen (DE); Sitzmann, Werner Dr., 21075 Hamburg (DE)
(74) Vertreter: Weber, Joachim, Dr.

(56) Entgegenhaltungen:
- EP-A2- 0 189 348
- EP-A2- 0 358 456
- WO-A1-96/29883
- BE-A6- 1 009 525

## Beschreibung

Die Erfindung bezieht sich auf ein Verfahren und eine Vorrichtung zum Herstellen einer Dauerbackware, welche beispielsweise zwei Kekse, zwei Waffeln oder ähnliches umfaßt, zwischen welchen sandwichartig eine Füllung angeordnet ist.

Der Stand der Technik zeigt unterschiedlichste Ausgestaltungsformen von sandwichartigen Dauerbackwaren. Üblicherweise wird zwischen zwei vorgebackenen Gebäckteilen eine flüssige, cremige oder pastöse Masse eingebracht, gegen welche die beiden Gebäckteile angelegt werden. Nach Erstarren, Aushärten oder einem ahnlichen Vorgang der zwischengelegten Masse sind die beiden Gebäckteile fest mit dieser verbunden, so daß die Dauerbackware einen sandwichartigen Aufbau aufweist.

Die aus dem Stand der Technik bekannten Ausgestaltungsformen weisen den Nachteil auf, daß die Form oder Ausgestaltung der Füllung optisch meist nicht sehr vorteilhaft ist und deshalb den Käufer oder Konsumenten nicht anspricht. Die ungünstige Optik ergibt sich daraus, daß zum einen die Dosierung der cremigen oder flüssigen Füllung nicht immer ganz exakt ist, weiterhin kann das Fließverhalten unterschiedlich sein, so daß die Füllung zur einen Seite des Sandwichgebacks bis an dessen Rand vordringen kann oder sogar über die beiden Gebäckteile vorstehen kann, während andere Bereiche, insbesondere an den Ecken, nicht ausreichend ausgefüllt sind. Ein zusätzlicher Nachteil kann darin bestehen, daß die beiden Gebäckteile nicht exakt fluchtend zueinander angeordnet werden können, wodurch sich ein optisch ungenügendes und unerwünschtes Aussehen ergibt.

Bei Sandwichgebacken, welche in einer Form hergestellt werden, ist durch den Kontakt mit der Form das nachfolgende Ausformen der Randbereiche der Füllung ebenfalls optisch ungenügend, weiterhin besteht die Gefahr, daß die beiden Gebackteile durch die Füllung benetzt oder überzogen werden, auch dies ist unerwünscht.

Der Stand der Technik zeigt weiterhin die Möglichkeit, eine sandwichartige Dauerbackware dadurch zu erzeugen, daß in eine flussige oder vorkristallisierte, in einer Form befindliche Schokoladenmasse ein Keks eingelegt wird, welcher, zumindest zum Teil, in die Schokolade eindringt. Nach dem Ausformen der Schokolade muß dann ein weiterer Keks oder ein weiteres Gebäckteil auf der rückseitigen Fläche der Schokoladentafel angebracht werden. Ein derartiges Sandwichgebäck ist nicht symmetrisch aufgebaut, weiterhin besteht der Nachteil, daß die Schokolade über den Rand der Gebäckteile vorsteht und zumindest das eingelegte Gebackteil nicht exakt hinsichtlich seiner Lage positionierbar ist.

Die DE 21 36 053 B 2 beschreibt eine Maschine zum Herstellen von Schichtkeksen. Nach dem Backen der Kekse wird auf jeden zweiten Keks eine cremige Füllschicht mittels eines Extruders aufgebracht. Mit Hilfe einer Wendevorrichtung wird ein benachbarter, nicht mit einer Füllschicht versehener Keks umgedreht und auf die Creme aufgelegt. Nachfolgend werden die beiden Kekse zusammengedrückt, um auf diese Weise einen Schichtkeks zu bilden. Durch die Aufbringung einer Creme ergeben sich ungleichmäßige Randbereiche der Füllung, diese kann zu dem Rand der beiden Kekse einen großen oder einen sehr geringen Abstand haben, so daß das optische Erscheinungsbild nicht optimal ist.

Aus der EP 682 872 A 1 ist eine Einlage für ein Nahrungsmittelprodukt vorbekannt, welche aus einer weichen Paste besteht, die eine hohe Viskosität und Klebrigkeit aufweist. Da derartige Pasten, die nachfolgend zu einem Lebensmittelprodukt weiterverarbeitet werden sollen, kontinuierlich hergestellt werden sollen, ergibt sich durch die hohe Viskosität und die Klebrigkeit das Problem der weiteren Verarbeitung bzw. des weiteren Handlings. Aus diesem Grunde werden die obere und die untere Fläche mit einer sehr dünnen Waffelschicht belegt, die lediglich zur Versiegelung der klebrigen Oberfläche dient. Das somit erhaltene Laminat-Produkt kann nachfolgend auf einfache Weise geschnitten oder gestampft und weiterverarbeitet werden. Die dünne Waffelbelegung dient somit lediglich dazu, die Klebrigkeit der Oberfläche der Paste und die sich daraus ergebenden Nachteile zu überwinden.

Der Erfindung liegt die Aufgabe zugrunde, ein Verfahren zum Herstellen einer sandwichartigen Dauerbackware sowie eine Vorrichtung zur Durchführung des Verfahrens zu schaffen, welche bei einfachem Aufbau und einfacher, betriebssicherer Durchführbarkeit die präzisionsgenaue Fertigung einer Dauerbackware ermöglichen.

Erfindungsgemäß wird die Aufgabe durch die Merkmale der neben geordneten Anspruchssätze gelost, die jeweiligen Unteransprüche zeigen weitere vorteilhafte Ausgestaltungen der Erfindung.

Bei der der Erfindung zugrundeliegenden Dauerbackware ist vor gesehen, daß zwischen einem oberen und einem unteren, im wesentlichen jeweils plattenförmigen Gebäckteil eine plattenförmige Füllung, welche als vorgefertigtes, eine formstabile Zwischenlage bildendes Element angebracht ist, welche mit den beiden Gebäckteilen fest verbunden ist.

Im Gegensatz zu der oben beschriebenen Literaturstelle handelt es sich bei der vorliegenden Erfindung um eine sandwich-artige Dauerbackware, welche aus drei festen, einzeln hergestellten und einzeln handhabbaren Elementen mittels eines Fügeverfahrens zusammengesetzt wird. Die beiden Gebackteile werden separat hergestellt, ebenso wie die plattenförmige, feste Füllung. Es handelt sich somit nicht um creme-artige oder pastöse Zwischenlagen zwischen zwei Gebackteilen, sondern um eine eigenständige formstabile Zwischenlage. Diese Zwischenlage bzw. Füllung wird mittels Zusatzstoffen mit den beiden Gebäckteilen verbunden. Somit unterscheiden sich sowohl die Grundkonzeption als auch die Verarbeitungsschritte von den Technologien, die in den beiden Entgegenhaltungen beschrieben sind.

Die Dauerbackware zeichnet sich somit durch eine Reihe erheblicher Vorteile aus. Durch die plattenförmige Ausgestaltung der Füllung ist es möglich, diese exakt zu dimensionieren und insbesondere Seitenflächen auszubilden, welche der Dauerbackware ein hervorragendes optisches Aussehen verleihen. Die Befestigung oder Verbindung der plattenförmigen, vorgefertigten Füllung mit den beiden Gebäckteilen kann auf unterschiedlichste Weise, abhängig von den jeweiligen Materialien der Füllung und der Gebäckteile erfolgen.

In einer günstigen Weiterbildung ist vorgesehen, daß die plattenförmige Füllung mittels eines Fügeverfahrens mit den Gebäckteilen verbunden ist. Für das Fügeverfahren können erfindungsgemäß Zusatzstoffe eingebracht werden, welche beispielsweise aus dem gleichen Material bestehen können wie die Füllung. So kann etwa bei einer Füllung, die in Form einer Schokoladetafel oder einer Tafel aus einer anderen fetthaltigen Masse besteht, das Verbinden oder Fugen mit den Gebäckteilen durch Aufbringen von zusätzlichen Volumina aus Schokolade oder aus der fetthaltigen Masse erfolgen.

Erfindungsgemäß kann die Füllung auch aus anderen Materialien oder Zusammensetzungen bestehen, beispielsweise aus Karamel, Käse, Gelee oder Marmelade.

Besonders günstig ist es dabei, wenn die Zusatzstoffe in zumindest eine Ausnehmung der Oberfläche der Oberseite und der Unterseite der Füllung eingebracht sind. Durch die Verwendung einer Ausnehmung wird sichergestellt, daß die beiden plattenformigen Gebackteile plan und parallel zu der plattenformigen Füllung liegen. Hierdurch ist eine exakte Ausrichtung der Position möglich, so daß sowohl die gewünschte Geometrie der fertigen Dauerbackware als auch eine hervorragende optische Erscheinung gewährleistet sind.

Die Ausnehmungen können durch Randbereiche der plattenförmigen Füllung gebildet sein. Dies bedeutet, daß die plattenformige Fullung mit einem Randwulst oder ahnlichem ausgebildet ist.

Weiterhin ist es günstig, wenn die plattenförmige Füllung als vorgefertigtes Element hergestellt wird. Die Dauerbackware kann somit aus drei Komponenten zusammengesetzt werden, die für sich jeweils unabhängig hergestellt sind. Insbesondere hinsichtlich der plattenformigen Füllung können somit Produktionsschritte vorgesehen sein, die speziell auf die plattenförmige Füllung abgestimmt sind, nicht jedoch die Herstellung der Gebäckteile oder das nachfolgende Zusammenfügen der beiden Gebäckteile mit der Füllung berücksichtigen müssen. Dies bedeutet, daß die plattenförmige Füllung, welche beispielsweise aus Schokolade oder einer fetthaltigen Masse besteht, in geeignete Formen gegossen werden kann. Das Herstellungsverfahren der Füllung kann unabhängig von den Gebäckteilen überwacht und gesteuert werden. Dabei erweist es sich insbesondere als vorteilhaft, daß die Seitenflachen der Füllung, welche bei der Dauerbackware sichtbar sind, in gezielter und beeinflußbarer Weise ausgebildet sein können. Es ist dabei besonders vorteilhaft, wenn die Seitenflächen eben sind, da hierdurch der optische Eindruck der Dauerbackware erheblich verbessert wird. Weiterhin ist es möglich, die Füllung in exakt vorbestimmter Geometrie zu erzeugen, beispielsweise in Form einer rechteckigen Schokoladetafel, deren Form zu der rechteckigen Form der Gebäckteile exakt paßt. Gleiches gilt für runde, ovale oder sonstige Formen.

Erfindungsgemaß kann die Dauerbackware auch drei plattenförmige Gebäckteile mit zwei zwischengelegten Füllungen oder, in analoger Weiterbildung, mehrere Gebäckteile mit mehreren Füllungen umfassen. Weiterhin ist es erfindungsgemäß auch möglich, mehrere plattenformige Füllungen direkt aufeinanderzulegen und nach oben und nach unten durch ein Gebäckteil zu begrenzen.

Alternativ zu den beschriebenen Fugeverfahren, bei welchem die Zusatzstoffe aus den gleichen Materialien bestehen wie die plattenformige Füllungen, ist es erfindungsgemaß auch möglich, andere Zusatzstoffe oder Fügestoffe zu verwenden, um die plattenförmige Füllung mit dem Gebackteil zu verkleben.

Als weitere erfindungsgemäß günstige Variante ist auch ein Fügen der plattenförmigen Füllung mit den Gebäckteilen ohne Zusatzstoffe möglich, dabei können Bereiche der plattenförmigen Füllung die Funktion der Fügestoffe übernehmen. Derartige Bereiche können beispielsweise durch Rippen, Ränder, Noppen oder ähnliches ausgebildet werden, welche bei der Herstellung der plattenförmigen Füllung erzeugt wurden.

Ein weiterer, wesentlicher Vorteil der erfindungsgemäßen Dauerbackware besteht darin, daß die Seitenflächen der plattenförmigen Füllung exakt zu den Seitenflächen oder Seitenbereichen der Gebäckteile ausgebildet und positioniert werden können. So ist es möglich, die Seitenflächen der plattenförmigen Füllung exakt fluchtend zu den Seitenbereichen der Gebäckteile anzuordnen, es ist jedoch auch möglich, die Seitenflächen der plattenförmigen Füllung zurückversetzt auszubilden, d.h. die plattenförmige Füllung kleiner auszugestalten als die Gebackteile. Alternativ hierzu ist es auch möglich, nur einzelne Seitenflachen oder Bereiche der Seitenflächen versetzt oder vorspringend oder fluchtend anzuordnen oder auszurichten.

Durch die Möglichkeit, die plattenförmige Füllung vorzufertigen und mit beliebigen Gebackteilen zu kombinieren, kann das Gewichtsverhaltnis der erfindungsgemäßen Dauerbackware in weitem Maße variiert werden. So ist es möglich, ein Gewichtsverhältnis von Füllung zu Gebäckteilen von 50 zu 50 zu realisieren, die Füllung kann jedoch wesentlich dünner oder wesentlich dicker ausgestaltet werden.

Die Gebäckteile können in Form von Keksen, Waffeln oder ähnlichem ausgebildet sein, hinsichtlich der Zusammensetzung der Gebäckteile, deren Festigkeit und Oberflachenbeschaffenheit bestehen praktisch keine Beschränkungen.

Die plattenförmige Füllung selbst kann hinsichtlich ihrer Seitenflächen dem für deren Materialien gunstigen Herstellungsverfahren angepaßt werden. Bei einer Herstellung der Füllung aus Schokolade kann es günstig sein, die Seitenflächen geneigt an zuordnen, beispielsweise mit einer Neigung von 4 Grad zur Senkrechten auf die Horizontalfläche der plattenförmigen Füllung.

Hinsichtlich des erfindungsgemäßen Verfahrens sind folgende Arbeitsschritte vorgesehen:
- Herstellen oder Bereitstellen der Gebäckteile
- Herstellen oder Bereitstellen der Füllung
- Jeweiliges Positionieren der Füllung und eines oberen Gebäck teils
- Aufbringen eines Zusatzstoffs auf die Oberseite der Füllung
- Umsetzen des oberen Gebäckteils
- Andrucken des oberen Gebäckteils auf den Zusatzstoff und die Füllung
- Positionieren eines unteren Gebackteils
- Aufbringen eines Zusatzstoffs auf die Oberseite des unteren Gebäckteils
- Auflegen des oberen Gebackteils und der an diesem befestigten Füllung auf das untere Gebäckteil
- Andrucken des oberen Gebackteils und der Füllung auf den Zusatzstoff und das untere Gebäckteil
- gegebenenfalls Transport des fertigen Sandwichs.

Erfindungsgemäß ist es somit wichtig, die Füllung und das jeweilige Gebäckteil exakt zu positionieren und umzusetzen. Durch diese erfindungsgemäße Maßnahme ist es möglich, eine Dauerbackware herzustellen, welche eine exakte Ausrichtung der beiden Gebäckteile sowie der zwischen diesen angeordneten plattenförmigen Füllung aufweist. Durch diese Maßnahmen wird das hervorragende optische Erscheinungsbild der fertigen Dauerbackware erzeugt. Im Gegensatz zu den aus dem Stand der Technik bekannten Lösungen erfolgt erfindungsgemäß eine präzise Zuordnung, welche mit höchster Genauigkeit erfolgen kann.

In einer Weiterbildung des erfindungsgemäßen Verfahrens ist vorgesehen, daß die Füllung durch Gießen einer Füllungsmasse in eine flache Form hergestellt wird. Durch ein derartiges Gießverfahren können sich glatte, präzise strukturierte Seitenflächen der Fullung ergeben, die Erfindung ist jedoch nicht auf die beschriebenen quaderförmigen Formen beschränkt, vielmehr können auch beliebige andere Formen sowohl der Füllung als auch der Gebäckteile zur Anwendung kommen. Besonders vorteilhaft ist es, wenn die Form die Füllung zum Aufbringen des Zusatzstoffs und zum Aufsetzen des oberen Gebäcks positioniert. Hierdurch ist sichergestellt, daß sich die Füllung in einer reproduzierbaren, exakten Position befindet.

Um das obere Gebäckteil zum Umsetzen und zum Aufsetzen auf die Füllung präzise vorzupositionieren, ist es besonders vorteilhaft, dieses in eine Positionierform einzulegen, welche mit zumindest einer Ausnehmung versehen ist. Es versteht sich, daß die Positionierform auch mehrere Ausnehmungen zur gleichzeitigen Einlegung mehrerer Gebackteile, welche nacheinander abgearbeitet werden, umfassen kann. Gleiches gilt für die Positionierung des unteren Gebäckteils.

Die korrekte Lage der Gebackteile in der Positionierform wird bevorzugterweise in einem separaten Verfahrensschritt überprüft. Dies kann durch optische Maßnahmen erfolgen. Dabei ist es auch möglich, zu überprüfen, ob das Gebäckstück vollständig und richtig ausgebildet ist.

Das Aufbringen des Zusatzstoffes erfolgt bevorzugterweise in eine Ausnehmung an der Oberseite der Füllung. Hierdurch wird sichergestellt, daß das obere Gebäckteil flächig auf dem Rand der Füllung aufliegt, ein seitliches Austreten des Zusatzstoffs wird ebenso verhindert, wie eine gekippte oder verwinkelte Zuordnung der Füllung zu dem Gebäckteil. Die Ausnehmung kann beispielsweise durch Vibrieren der Füllungsmasse beim Kristallisieren, Erkalten und/oder Ausharten durch dadurch hervorgerufene Bildung eines Schüttelrandes erzeugt werden. Es ist jedoch auch möglich, einen definierten Randbereich auszubilden, beispielsweise durch Gießen oder durch Verpressen der Masse der Füllung.

Der Zusatzstoff wird erfindungsgemaß bevorzugterweise in Form von Klebepunkten aufgebracht, es ist jedoch auch möglich, Streifen oder größere Volumina vorzusehen.

Hinsichtlich der Vorrichtung zur Herstellung der erfindungsgemäßen Dauerbackware wird die Aufgabe durch eine Vorrichtung mit folgenden Merkmalen gelost:
- Eine eine Form umfassende Einrichtung zum Gießen der Füllung
- Eine Aufbereitungs- und Dosiereinrichtung für die Füllungsmasse
- Eine mit einer ersten Positionierform versehene Einrichtung zum Aufnehmen und Positionieren eines oberen Gebäckteils
- Eine Vorrichtung zum Aufbringen eines Zusatzstoffs auf die Fullung
- Eine Umsetzvorrichtung zum Greifen, Transportieren, Auflegen und Andrücken des oberen Gebäckteils
- Eine mit einer zweiten Positionierform versehene Einrichtung zum Aufnehmen und Positionieren des unteren Gebäckteils
- Eine Vorrichtung zum Aufbringen eines Zusatzstoffs auf das untere Gebäckteil
- Eine Umsetzvorrichtung zum Greifen, Transportieren, Auflegen und Andrücken des oberen Gebäckteils zusammen mit der Füllung.

Durch die erfindungsgemäße Vorrichtung ist es somit möglich, die einzelnen Herstellungsschritte jeweils einzeln mit der gewünschten Präzision durchzuführen.

Die Umsetzvorrichtung weist in günstiger Ausgestaltung einen pneumatischen Greifer auf. Mittels eines derartigen Greif-Mechanismus ist es möglich, das Gebäckteil ohne Beschädigungen aufzunehmen und zu versetzen. Dabei erweist es sich als besonders günstig, wenn der pneumatische Greifer zum Greifen und Anheben des Gebäckteils mit einem Unterdruck und zum Andrücken des wieder abgelegten Gebäckteils mit einem Überdruck beaufschlagt ist. Mittels des Greifers ist es somit nicht nur möglich, das Gebäckteil zu transportieren, sondern auch nach dem Ablegen auf die Füllung bzw. den Zusatzstoff anzudrücken.

Die Umsetzvorrichtung kann entweder einen mechanischen Getriebemechanismus umfassen, der beispielsweise einen sinoiden Bewegungsverlauf hat oder elektronische Transfermittel, beispielsweise Linearmotoren oder Linearförderer. Weiterhin ist es günstig, wenn die Umsetzvorrichtung zur Lagekorrektur des Gebäckteils mit Mitteln zum horizontalen Verschieben und/oder zur Drehung um eine Hochachse versehen ist. Hierdurch ist es möglich, geringfügige Fehllagen des Gebäckteils zu kompensieren.

Die Umsetzvorrichtung ist bevorzugterweise hochpräzise ausgebildet, sie weist beispielsweise eine Genauigkeit zwischen 0,1 bis 0,3 mm auf. Der Verschiebeweg der Umsetzvorrichtung, das heißt der Transportweg des Gebäckteils kann bis zu einem Meter betragen. Auf diese Weise können Herstellungslinien für die Füllung mit Transportlinien oder Herstellungslinien der Gebäckteile verknüpft werden. Um die Positionierform mit der bereits erwähnten optischen Einrichtung zur Lageerkennung und zur Überprüfung der Geometrie des Gebäckteils auszurüsten, ist es vorteilhaft, wenn diese aus einem transparenten Kunststoff gefertigt ist. Gleiches gilt für die Form zum Gießen der Füllung. Auch hier kann der transparente Kunststoff die Möglichkeit einer optischen Kontrolle ergeben. Zum Entformen der gegossenen Füllung ist die Gießform bevorzugterweise verformbar. Auch die Gießform ist mit sehr engen Toleranzen gefertigt, die zwischen 0,1 und 0,3 mm liegen können.

Im folgenden wird die Erfindung anhand eines Ausführungsbeispiels in Verbindung mit der Zeichnung beschrieben. Dabei zeigt:
- Fig. 1: eine vereinfachte perspektivische Darstellung eines Ausführungsbeispiels des erfindungsgemäßen Sandwichgebäcks,
- Fig. 2: eine vereinfachte Schnittansicht durch das in Fig. 1 gezeigte Sandwichgeback,
- Fig. 3: eine Darstellung der in den Fig. 1 und 2 gezeigten plattenförmigen Fullung,
- Fig. 4: eine Darstellung eines ersten Herstellungsschrittes durch Fügen eines oberen Gebäckteils mit der plattenförmigen Füllung,
- Fig. 5: eine Darstellung eines möglichen zweiten Herstellungsschrittes durch Aufbringen von Zusatzstoffen auf ein unteres Gebäckteil vor dem Auflegen der in Fig. 4 gezeigten Anordnung,
- Fig. 6a und 6b: ein Ablaufdiagramm der Arbeitsgange zum Fügen des oberen Gebäckteils mit der Füllung und zum Aufsetzen derselben auf das untere Gebäckteil,
- Fig. 7: eine schematische Darstellung des für die Arbeitsschritte nach Fig. 6a und 6b verwendbaren Umsetzers,
- Fig. 8: eine schematische Teilansicht einer Vorrichtung zum Erfassen der exakten Positionierung eines Gebäckteils in einer Positionierform,
- Fig. 9: eine schematische Darstellung einer Vorrichtung zum Ausrichten der Lage eines Gepackteils in der Positionierform, und
- Fig. 10: eine perspektivische Teilansicht, ähnlich Fig. 7, eines Teils der erfingungsgemäßen Vorrichtung.

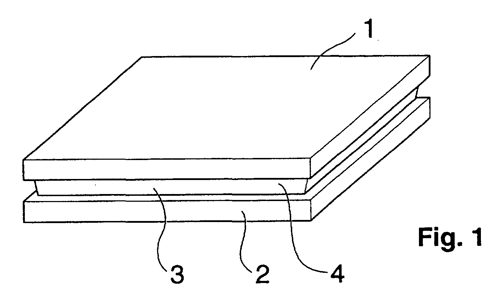

Die Fig. 1 zeigt in vereinfachter, schematischer Darstellung ein Ausführungsbeispiel eines erfindungsgemäßen Sandwichgebäcks. Dieses umfaßt ein oberes Gebäckteil 1 sowie ein unteres Gebäckteil 2. Diese können in Form von plattenförmigen Keksen ausgebildet sein. Die Fig. 1 zeigt eine sehr schematische Darstellung, in welcher die Gebäckteile quaderförmig ausgebildet sind. Es versteht sich, daß die Seitenflächen 9 und 10 der Gebäckteile 1 und 2 gerippt, gewellt oder in anderer Weise strukturiert sein können. Gleiches gilt für die jeweiligen oberen und unteren Flächen der Gebäckteile 1 und 2.

Zwischen die beiden Gebäckteile 1 und 2 ist eine plattenformige Füllung 3 eingelegt, welche als vorgefertigtes, eine formstabile Zwischenlage bildendes Element ausgebildet ist und plane Seltenflachen 4 aufweist.

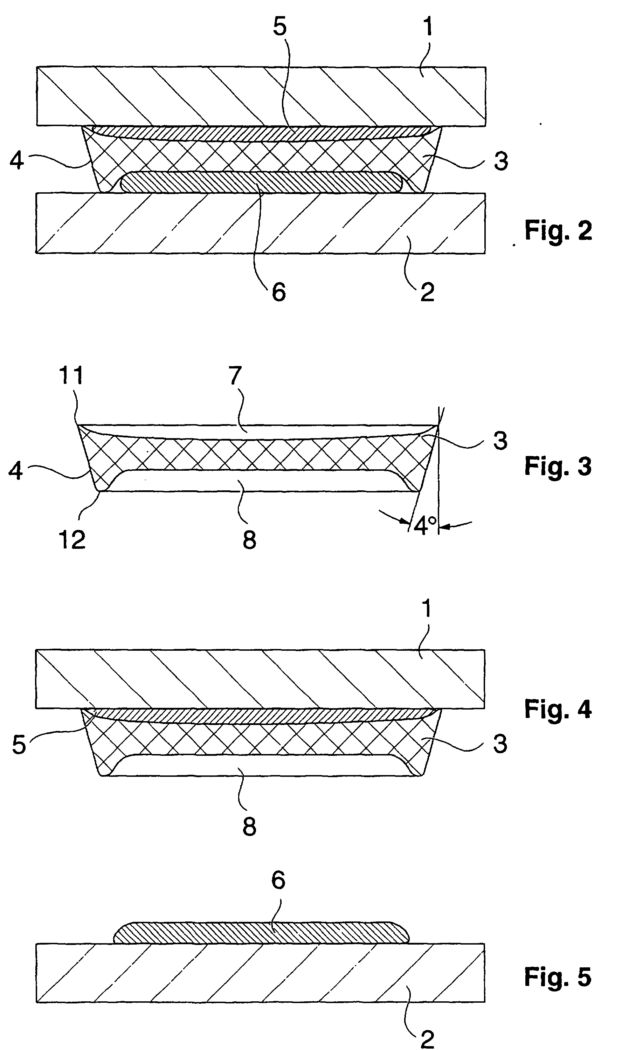

Wie die Schnittansichten der Fig. 2 und 3 zeigen, weist die plattenformige Füllung 3 jeweils ebene Seitenflachen 4 auf, welche in einem Winkel, beispielsweise 4 Grad, zur Senkrechten auf die Plattenfläche geneigt sind. Durch diese Neigung der Seitenflächen ist zum einen sichergestellt, daß die plattenförmige Füllung gut ausgeformt werden kann, zum anderen ergibt sich ein sehr ansprechendes optisches Erscheinungsbild.

Die Füllung 3 ist weiterhin mit einer oberen Ausnehmung 7 und einer unteren Ausnehmung 8 versehen. Die obere Ausnehmung 7 kann durch die Herstellung der plattenförmigen Füllung 3 erzeugt werden, nämlich durch einen Schüttelrand 11, welcher sich bei der Herstellung der Schokoladentafel ausbildet. Die untere Ausnehmung 8 wird durch einen Wulst 12 gebildet, der durch die Gußform der Schokoladentafel erzeugt wird.

Aus den Fig. 2 und 3 ergibt sich somit, daß die Ausnehmungen 7 und 8 ein ausreichendes Volumen bereitstellen, um jeweils einen oberen Zusatzstoff 5 und einen unteren Zusatzstoff 6 einzubringen, mit deren Hilfe ein Fügen oder Verbinden der plattenförmigen Füllung 3 mit dem oberen Gebäckteil 1 und dem unteren Gebäckteil 2 möglich wird.

In Fig. 4 ist ein erster Herstellungsschritt des Sandwichgebacks gezeigt. Nach dem Herstellen der plattenförmigen Füllung 3 wird in deren Ausnehmung 7 der obere Zusatzstoff 5 eingebracht. Das Einbringen des Zusatzstoffs kann flachig, punktförmig oder streifenförmig erfolgen. Der Zusatzstoff 5 kann, wenn die Füllung 3 aus Schokolade hergestellt ist, aus dem gleichen Schokoladenwerkstoff bestehen. Nachfolgend wird das obere Gebackteil 1 exakt positioniert aufgesetzt und angedrückt, so daß es auf den Schüttelrand 11 aufliegt. Hierdurch ist eine plane, exakte Zuordnung zwischen dem oberen Gebäckteil 1 und der Füllung 3 sichergestellt.

Nachdem der obere Zusatzstoff 5 erstarrt oder ausgehärtet ist, ist es entweder möglich, die in Fig. 4 gezeigte Anordnung um 180 Grad zu wenden. In die gemäß Fig. 4 untere Ausnehmung 8 kann dann der Zusatzstoff 6 eingebracht werden. Nachfolgend ist es möglich, analog zu dem in Fig. 4 gezeigten Herstellungsverfahren, das andere Gebäckteil 2 exakt positioniert aufzulegen, so daß dieses auf dem Randwulst 12 aufliegt und ebenfalls exakt positioniert ist.

Alternativ hierzu kann auch so vorgegangen werden, daß, wie in Fig. 5 gezeigt, auf das untere Gebäckteil 2 der Zusatzstoff 6 aufgebracht wird, woraufhin die in Fig. 4 gezeigte Anordnung exakt positioniert aufgesetzt wird.

Wie sich aus der obigen Beschreibung ergibt, ist es erfindungsgemäß möglich, die vorgefertigte, plattenförmige Füllung exakt auszubilden und zwischen den beiden Gebäckteilen zu positionieren, wobei die Seitenflächen 4 der Füllung 3 exakt plan und glanzend sein können, so daß das Sandwichgebäck höchste optische Anforderungen erfüllt.

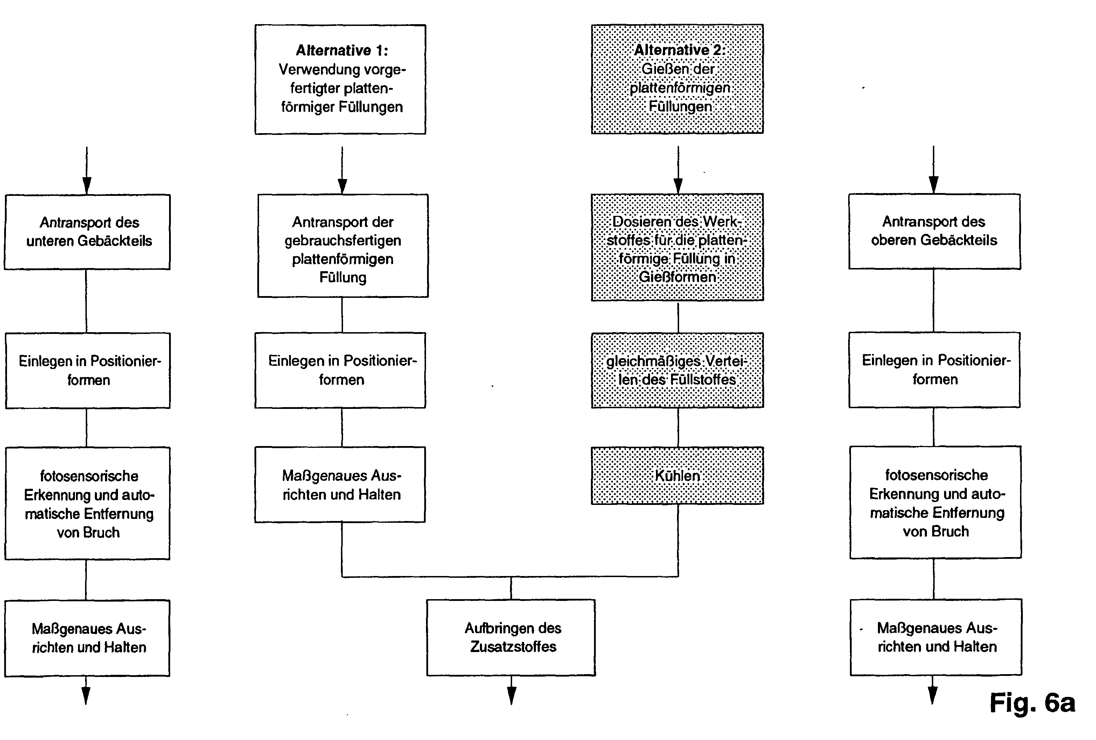

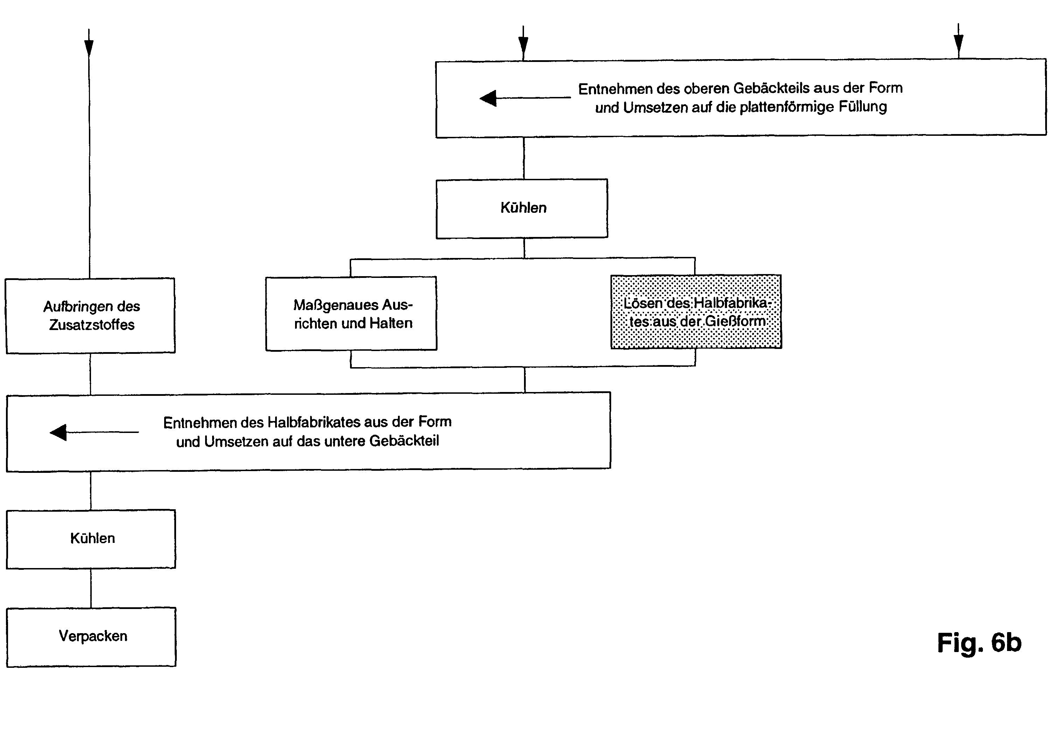

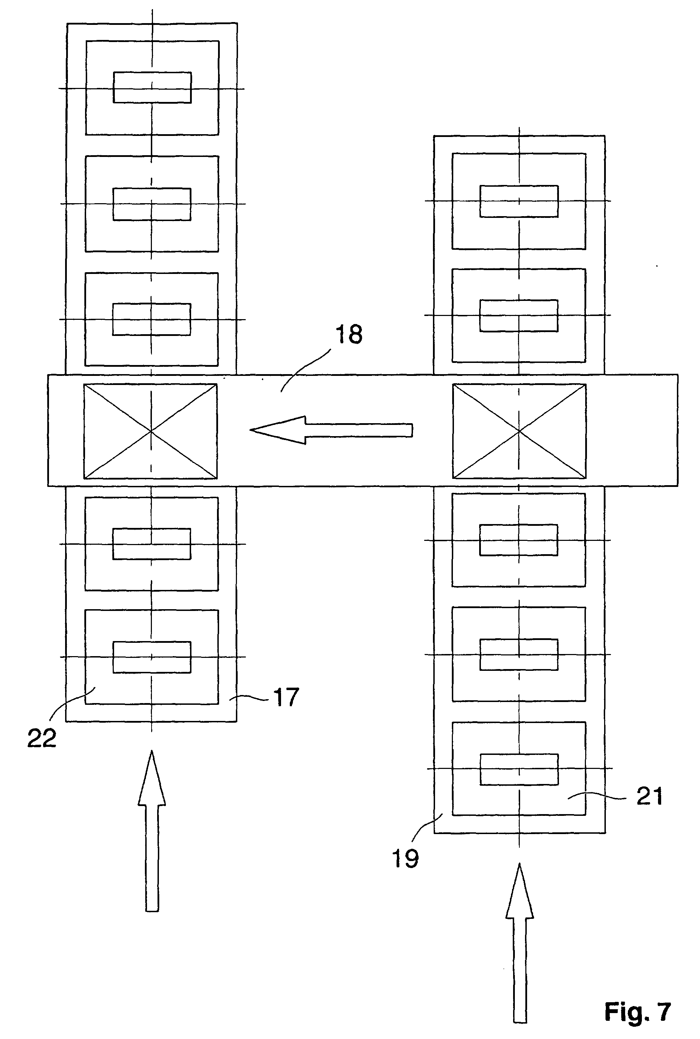

Die Figuren 6a und 6b zeigen ein Ablaufdiagramm, in welchem die einzelnen Arbeitsschritte anhand eines Ausführungsbeispiels erläutert sind, in Fig. 7 ist in schematischer Weise ein Umsetzer 18 gezeigt.

Bei Alternative 2 gemäß Fig. 6 erfolgt zunächst ein Dosieren von Füllungswerkstoff in eine leere Gießform 22, dieser Vorgang wird an einer Dosier- und Gießvorrichtung durchgeführt. Anschließend wird die Form 22 zum Gießen der Füllung, welche üblicherweise mehrere Ausnehmungen zum gleichzeitigen Erzeugen mehrerer Füllungen aufweist, in eine Vorrichtung zum gleichmäßigen Verteilen des Füllstoffs, z.B. eine Vibrationsvorrichtung, überfuhrt. Das Vibrieren dient dazu, die Form gleichmaßig zu füllen und eine gleichmäßige Dicke der plattenförmigen Füllung zu erzeugen. Weiterhin wird auf diese Weise ein Schüttelrand 11 erzeugt, welcher die Ausnehmung 7 bildet (siehe Fig. 3). Nachfolgend kann ein Ankühlen der plattenförmigen Füllung erfolgen, beispielsweise bei einer Temperatur von +12°C über einen Zeitraum von 3 Minuten, der Kühlvorgang kann in einer Kühlvorrichtung durchgeführt werden.

Bei Alternative 1 gemäß Fig. 6 werden vorgefertigte Fullungs platten verwendet. Die gebrauchsfertig zur Verfügung gestellten plattenförmigen Füllungen werden in eine leere Positionierform eingelegt und ausgerichtet.

In einem nächsten Arbeitsschritt erfolgt ein Dosieren des oberen Zusatzstoffs 5, welcher Klebetropfen bildet, auf die Oberseite der Füllung 3. Dieser Vorgang wird mittels einer Dosiervorrichtung 16 durchgeführt.

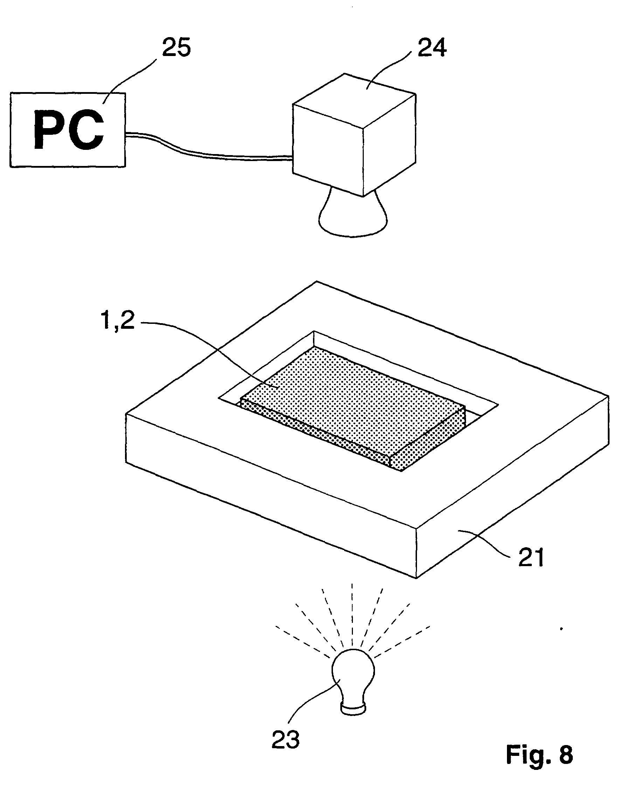

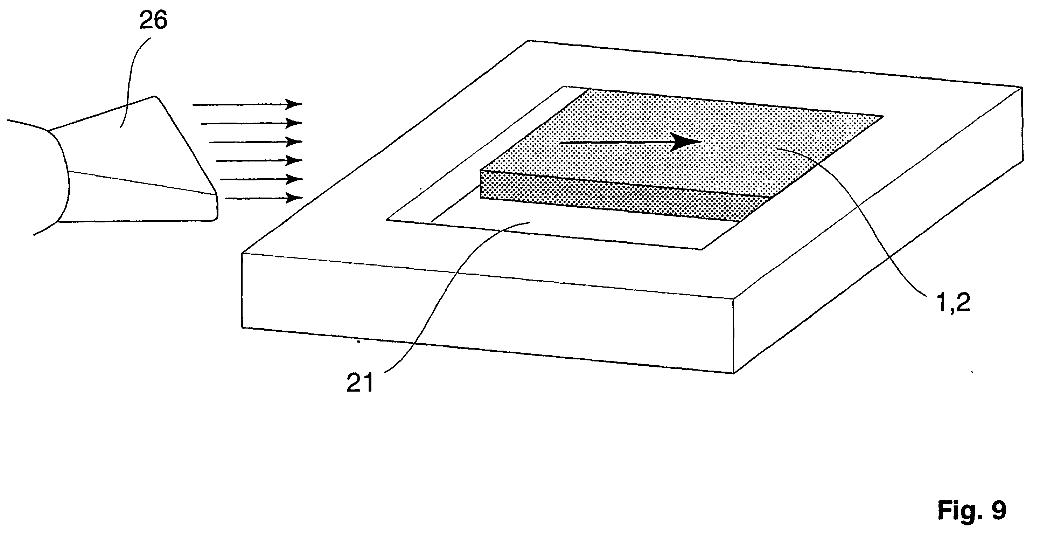

Wie Fig. 6 zeigt, erfolgt parallel zu den beschriebenen Arbeitsschritten ein Transport von leeren Positionierformen 21. In die an der Oberfläche dieser Positionierformen 21 ausgebildeten Ausnehmungen werden obere Gebäckteile 1 so eingelegt, daß deren Oberseite nach oben weist. Die oberen Gebäckteile 1 können mittels einer Vorrichtung ausgerichtet werden, welche nachfolgend beispielhaft im Zusammenhang mit den Figuren 8 und 9 beschrieben werden wird, nachfolgend werden sie zusammen mit der Positionierform 21 unter dem Umsetzer oder der Umsetzvorrichtung 18 zentriert oder positioniert.

Die Figuren 8 und 9 zeigen in schematischer Darstellung Vorrichtungen zur Erfassung der exakten Lage der Gebäckteile 1, 2 in einer Positionierform 21 und zum Ausrichten der Lage der Gebäckteile.

Die Fig. 8 zeigt zunächst in schematischer Weise eine Positionierform 21, welche an Ihrer Oberseite eine Ausnehmung tragt, in welche ein Gebäckteil 1, 2 eingelegt ist. Die Positionierform 21 ist aus transparentem Material gefertigt, unterhalb der Positionierform 21 befindet sich eine Lichtquelle 23, oberhalb der Positionierform 21 ist eine elektronische Kamera 24 gelagert, welche zur Lageerkennung des Gebäckteils dient. Zusätzlich kann ermittelt werden, ob das Gebäckteil unvollständig ausgebildet ist oder beispielsweise Risse oder Sprunge hat. Die von der Kamera 24 ermittelten Daten werden in einem Rechner 25 verarbeitet.

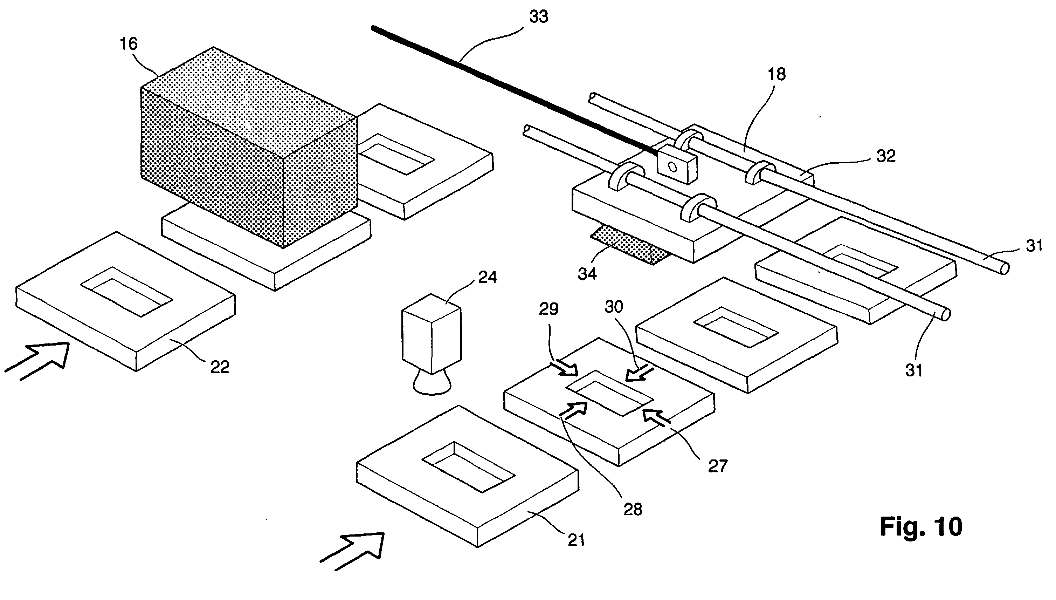

Nachfolgend wird, falls erforderlich, die Lage des Gebäckteils 1, 2 zu der Positionierform 21 korrigiert. Eine Möglichkeit ist in Fig. 9 dargestellt. Dort ist ein Gebläse 26 gezeigt, mit Hilfe dessen das Gebäckteil pneumatisch in eine Eckposition der Positionierform 21 geschoben wird (siehe Pfeil in Fig. 9). Alternativ hierzu ist es auch, wie in Fig. 10 gezeigt, möglich, in der Positionierform 21 an jedem Seitenbereich Luftaustritts offnungen vorzusehen, um ein selektives Verschieben des Gebäckteils 1, 2 mittels pneumatischer Vorrichtungen 27, 28, 29 und oder 30 zu erzielen. Es ist selbstverständlich auch möglich, die Positionierform 21 schräg zu stellen und zu rütteln, um auf diese Weise das Gebäckteil in eine vorbestimmte Lage zu bringen. Als weitere Alternative ist auch die Verwendung von Bürsten oder ähnlichem möglich.

Nachfolgend erfolgt ein automatisches Umsetzen der oberen Gebäckteile 1 auf die Füllungen 3. Zum Umsetzen wird ein Umsetzer 18 verwendet, der in einem möglichen Ausführungsbeispiel schematisch in Fig. 10 gezeigt ist. Der Umsetzer 18 umfaßt Führungsstangen 31, an welchen verschiebbar ein Schlitten 32 gelagert ist. Der Schlitten 32 ist mittels eines Antriebs 33 bewegbar, dieser Antrieb kann in Form eines elektrischen Linearmotors oder eines Getriebes ausgebildet sein. So ist es beispielsweise möglich, einen mechanischen Getriebemechanismus mit einem sinoiden Bewegungsablauf zu verwenden. An der Unterseite des Schlittens 32 ist ein pneumatischer Greifer 34 gelagert, mit Hilfe dessen die Gebackstucke 1, 2 bzw. die Füllung 3 auf genommen werden konnen.

Es erfolgt ein automatisches Andrücken der oberen Gebäckteile 1 auf die oberen Zusatzstoffe 5 (Klebetropfen).

Nachfolgend werden die mit den oberen Gebäckteilen 1 verbundenen Füllungen 3 gekühlt, beispielsweise über einen Zeitraum von 20 bis 45 Minuten bei einer Temperatur zwischen 20 bis 24°C.

In einem weiteren Arbeitsgang werden untere Gebackteile 2 mit der Oberseite nach unten in eine leere zweite Positionierform eingelegt und entsprechend ausgerichtet. Nachfolgend erfolgt mittels der Dosiervorrichtung 16 ein Dosieren von unteren Zusatzstoffen 6 bzw. Klebetropfen auf die nach oben weisende Unterseite der unteren Gebäckteile 2.

Wie Fig. 6 zeigt, erfolgt in Alternative 2 ein Lösen der gekühlten Füllungen 3, welche mit den oberen Gebäckteilen 1 verbunden sind, aus der Gießform. Dies kann durch Verwindung der Gießform erfolgen, wodurch die Füllungen 3 gelöst werden. Die Gießform wird nachfolgend, zusammen mit den Füllungen 3 und den mit diesen verbundenen oberen Gebäckteilen 1 unter dem Umsetzer 18 positioniert.

Bei der Verwendung von vorgefertigten plattenförmigen Füllungen (Alternative 1) werden die Halb-Sandwiches, bestehend aus der Fullung und dem oberen Gebackteil, erneut mit einer Vorrichtung in der Form ausgerichtet und positioniert.

Nachfolgend erfolgt ein automatisches Umsetzen der Füllungen 3 und der mit diesen verbundenen oberen Gebackteilen 1 auf die unteren Gebäckteile 2.

Das somit erzeugte Sandwich-Paket wird nach dem automatischen Andrücken gekühlt, beispielsweise über einen Zeitraum von 15 Minuten.

Nach dem Ausformen des nunmehr fertiggestellten Sandwichs kann dieses weiter transportiert und verpackt werden.

## Patentansprüche

1. Verfahren zum Herstellen einer sandwichartigen Dauerbackware, welche aus einem oberen (1) und einem unteren (2), im wesentlichen jeweils plattenförmigen Gebäckteil und einer zwischen diesen befestigten plattenförmigen Füllung (3) besteht, **gekennzeichnet durch** die folgenden Arbeitsschritte:
- Herstellen oder Bereitstellen der Gebäckteile (1, 2);
- Herstellen oder Bereitstellen der Füllung (3);
- jeweiliges Positionieren der Füllung (3) und eines oberen Gebäckteils (1) ;
- Aufbringen eines Zusatzstoffs (5) auf die Oberseite der Füllung (3) ;
- Umsetzen des oberen Gebäckteils (1) ;
- Andrücken des oberen Gebäckteils (1) auf den Zusatzstoff (5) und die Füllung (3) ;
- Positionieren eines unteren Gebäckteils (2);
- Aufbringen eines Zusatzstoffs (6) auf die Oberseite des unteren Gebäckteils (2);
- Auflegen des oberen Gebäckteils (1) und der an diesem befestigten Füllung (3) auf das untere Gebäckteil (2);
- Andrücken des oberen Gebäckteils (1) und der Füllung (3) auf den Zusatzstoff (6) und das untere Gebäckteil (2).

2. Verfahren nach Anspruch 1, **dadurch gekennzeichnet, daß** die Füllung (3) durch Gießen einer Füllungsmasse in eine flache Form hergestellt wird.

3. Verfahren nach Anspruch 2, **dadurch gekennzeichnet, daß** die Form die Füllung (3) zum Aufbringen des Zusatzstoffs (5) und zum Aufsetzen des oberen Gebäcks (1) positioniert.

4. Verfahren nach einem der Ansprüche 1 bis 3, **dadurch gekennzeichnet, daß** das obere Gebäckteil (1) zum Positionieren in eine mit zumindest einer Ausnehmung versehene erste Positionierform eingelegt wird.

5. Verfahren nach Anspruch 4, **dadurch gekennzeichnet, daß** die korrekte Form und Lage des oberen Gebäckteils (1) in der ersten Positionierform ermittelt wird.

6. Verfahren nach einem der Ansprüche 1 bis 5, **dadurch gekennzeichnet, daß** das Aufbringen des Zusatzstoffs (5) in eine Ausnehmung (7) an der Oberseite der Füllung (3) erfolgt.

7. Verfahren nach Anspruch 6, **dadurch gekennzeichnet, daß** die Ausnehmung (7) durch Vibrieren der Füllungsmasse beim Kristallisieren, Erkalten und/oder Aushärten durch Bildung eines Schüttelrands (11) erzeugt wird.

8. Verfahren nach Anspruch 6 oder 7, **dadurch gekennzeichnet, daß** der Zusatzstoff (5) in Form von Klebepunkten auf die Füllung (3) aufgebracht wird.

9. Verfahren nach einem der Ansprüche 1 bis 8, **dadurch gekennzeichnet, daß** das untere Gebäckteil (2) zum Positionieren in eine mit zumindest einer Ausnehmung versehene zweite Positionierform eingelegt wird.

10. Verfahren nach Anspruch 9, **dadurch gekennzeichnet, daß** die korrekte Form und Lage des unteren Gebäckteils (2) in der zweiten Positionierform ermittelt wird.

11. Verfahren nach einem der Ansprüche 1 bis 10, **dadurch gekennzeichnet, daß** der Zusatzstoff (6) in Form von Klebepunkten auf das untere Gebäckteil (2) aufgebracht wird.

12. Vorrichtung zum Herstellen einer sandwichartigen Dauerbackware, welche aus einem oberen (1) und einem unteren (2), im wesentlichen jeweils plattenförmigen Gebäckteil und einer zwischen diesen befestigten plattenförmigen Füllung (3) besteht, **gekennzeichnet durch**:
- eine eine Form umfassende Einrichtung zum Gießen der Füllung (3);
- eine Aufbereitungs- und Dosiervorrichtung für die Füllungsmasse;
- eine mit einer ersten Positionierform versehene Einrichtung zum Aufnehmen und Positionieren eines oberen Gebäckteils (1) ;
- eine Vorrichtung zum Aufbringen eines Zusatzstoffs (5) auf die Füllung (3);
- eine Umsetzvorrichtung (13) zum Greifen, Transportieren, Auflegen und Andrücken des oberen Gebäckteils (1) ;
- eine mit einer zweiten Positionierform versehene Einrichtung zum Aufnehmen und Positionieren eines unteren Gebäckteils (2) ;
- eine Vorrichtung zum Aufbringen eines Zusatzstoffs (6) auf das untere Gebäckteil (2)
- eine Umsetzvorrichtung (13) zum Greifen, Transportieren, Auflegen und Andrücken des oberen Gebäckteils (1) zusammen mit der Füllung (3) auf das untere Gebäckteil (2).

13. Vorrichtung nach Anspruch 12, **dadurch gekennzeichnet, daß** die Umsetzvorrichtung (13) einen pneumatischen Greifer umfaßt.

14. Vorrichtung nach Anspruch 13, **dadurch gekennzeichnet, daß** der pneumatische Greifer zum Greifen und Anheben des Gebäckteils (1, 2) mit einem Unterdruck und zum Andrücken des abgelegten Gebäckteils (1, 2) mit einem Überdruck beaufschlagbar ist.

15. Vorrichtung nach einem der Ansprüche 12 bis 14, **dadurch gekennzeichnet, daß** die Umsetzvorrichtung (13) einen mechanischen Getriebemechanismus umfaßt.

16. Vorrichtung nach Anspruch 15, **dadurch gekennzeichnet, daß** der Getriebemechanismus einen sinoiden Bewegungsverlauf aufweist.

17. Vorrichtung nach einem der Ansprüche 12 bis 14, **dadurch gekennzeichnet, daß** die Umsetzvorrichtung (13) elektronische Linearförderer umfaßt.

18. Vorrichtung nach einem der Ansprüche 12 bis 17, **dadurch gekennzeichnet, daß** die Umsetzvorrichtung (13) zur Lagekorrektur des Gebäckteils (1, 2) mit Mitteln zum horizontalen Verschieben und/oder zur Drehung um eine Hochachse versehen ist.

19. Vorrichtung nach einem der Ansprüche 12 bis 18, **dadurch gekennzeichnet, daß** die Umsetzvorrichtung (13) eine Genauigkeit zwischen 0,1 und 0,3 mm aufweist.

20. Vorrichtung nach einem der Ansprüche 12 bis 19, **dadurch gekennzeichnet, daß** die Umsetzvorrichtung (13) einen Verschiebeweg oder Transportweg von bis zu einem Meter aufweist.

21. Vorrichtung nach einem der Ansprüche 12 bis 20, **dadurch gekennzeichnet, daß** die Positionierform mit einer optischen Einrichtung zur Lageerkennung und zur Überprüfung der Geometrie des Gebäckteils (1, 2) versehen ist.

22. Vorrichtung nach einem der Ansprüche 12 bis 21, **dadurch gekennzeichnet, daß** die Positionierform aus transparentem Kunststoff gefertigt ist.

23. Vorrichtung nach einem der Ansprüche 12 bis 22, **dadurch gekennzeichnet, daß** die Form zum Gießen der Füllung (3) aus Kunststoff gefertigt ist.

24. Vorrichtung nach Anspruch 23, **dadurch gekennzeichnet, daß** die Form zum Gießen der Füllung (3) zum Entformen derselben verformbar ist.

25. Vorrichtung nach einem der Ansprüche 12 bis 24, **dadurch gekennzeichnet, daß** die Form zum Gießen der Füllung (3) und die Positionierform mit Toleranzen zwischen 0,1 und 0,3 mm gefertigt sind.

## Claims

1. A process for producing a sandwich-type long-life bakery product, which consists of a top (1) and a bottom (2) baked part, which is substantially laminar in each case, and a laminar filling (3) fixed between them,
**characterised by** the following operating steps:
- producing or supplying the baked parts (1, 2);
- producing or supplying the filling (3);
- in each case positioning the filling (3) and a top baked part (1);
- applying an additional substance (5) onto the top of the filling (3);
- turning over the top baked part (1);
- pressing the top baked part (1) onto the additional substance (5) and the filling (3);
- positioning a bottom baked part (2);
- applying an additional substance (6) onto the top of the bottom baked part (2);
- laying the top baked part (1) and the filling (3) attached thereto onto the bottom backed part (2);
- pressing the top baked part (1) and the filling (3) onto the additional substance (6) and the bottom baked part (2).

2. A process according to Claim 1,
**characterised in that** the filling (3) is produced by casting a filling mass into a flat mould.

3. A process according to Claim 2,
**characterised in that** the mould positions the filling (3) for applying the additional substance (5) and for placing the top baked product (1) thereon.

4. A process according to one of Claims 1 to 3,
**characterised in that** for positioning, the top baked part (1) is inserted into a first positioning mould provided with at least one recess.

5. A process according to Claim 4,
**characterised in that** the correct shape and position of the top baked part (1) in the first positioning mould is determined.

6. A process according to one of Claims 1 to 5,
**characterised in that** the application of the additional substance (5) into a recess (7) on the top side of the filling (3) takes place.

7. A process according to Claim 6,
**characterised in that** the recess (7) is produced by vibrating the filling mass during crystallisation, cooling and/or hardening by forming a vibrating edge (11).

8. A process according to Claim 6 or 7,
**characterised in that** the additional substance (5) is applied to the filling (3) in the form of blobs of adhesive.

9. A process according to one of Claims 1 to 8,
**characterised in that** for positioning, the bottom baked part (2) is inserted into a second positioning mould provided with at least one recess.

10. A process according to Claim 9,
**characterised in that** the correct shape and position of the bottom baked part (2) in the second positioning mould is determined.

11. A process according to one of Claims 1 to 10,
**characterised in that** the additional substance (6) is applied in the form of blobs of adhesive to the bottom baked part (2).

12. A device for producing a sandwich-type long-life bakery product, which consists of a top (1) and a bottom (2) baked part, which in each case are substantially laminar, and a laminar filling (3) fixed between them,
**characterised by:**
- a device comprising a mould for casting the filling (3);
- a preparation and metering device for the filling mass;
- a device provided with a first positioning mould for accommodating and positioning a top baked part (1);
- a device for applying an additional substance (5) onto the filling (3);
- a turning-over device (13) for gripping, transporting, applying and pressing the top baked part (1);
- a device provided with a second positioning mould for accommodating and positioning a bottom baked part (2);
- a device for applying an additional substance (6) onto the bottom baked part (2)
- a turning-over device (13) for grabbing, transporting, applying and pressing the top baked part (1) together with the filling (3) onto the bottom baked part (2).

13. A device according to Claim 12,
**characterised in that** the turning-over device (13) comprises a pneumatic gripper.

14. A device according to Claim 13,
**characterised in that** the pneumatic gripper can be supplied with a low pressure for gripping and raising the baked part (1, 2) and with a excess pressure for pressing the deposited baked part (1, 2).

15. A device according to one of Claims 12 to 14,
**characterised in that** the turning-over device (13) comprises a mechanical gear mechanism.

16. A device according to Claim 15,
**characterised in that** the gear mechanism has a sinusoidal movement.

17. A device according to one of Claims 12 to 14,
**characterised in that** the turning-over device (13) comprises electronic linear conveyors.

18. A device according to one of Claims 12 to 17,
**characterised in that** for correcting the position of the baked part (1, 2) the turning-over device (13) is provided with means for horizontal displacement and/or for rotation around a vertical axis.

19. A device according to one of Claims 12 to 18,
**characterised in that** the turning-over device (13) has an accuracy of between 0.1 and 0.3 mm.

20. A device according to one of Claims 12 to 19,
**characterised in that** the turning-over device (13) comprises a displacement path or transport path of up to one metre.

21. A device according to one of Claims 12 to 20,
**characterised in that** the positioning mould is provided with an optical device for detecting the position and for checking the geometry of the baked part (1, 2).

22. A device according to one of Claims 12 to 21,
**characterised in that** the positioning mould is produced from transparent plastic.

23. A device according to one of Claims 12 to 22,
**characterised in that** the mould for casting the filling is produced from plastic.

24. A device according to Claim 23,
**characterised in that** the mould for casting the filling (3) is deformable for its demoulding.

25. A device according to one of Clams 12 to 24,
**characterised in that** the mould for casting the filling (3) and the positioning mould are produced with tolerances of between 0.1 and 0.3 mm.

## Revendications

1. Procédé pour produire une pâtisserie durable du type sandwich, comprenant une partie de pâtisserie supérieure (1) et une partie de pâtisserie inférieure (2) respectivement pour l'essentiel en forme de plaque, et un fourrage (3) en forme de plaque fixé entre celles-ci, **caractérisé par** les étapes de travail suivantes :
- fabrication ou mise à disposition des parties de pâtisserie (1, 2) ;
- fabrication ou mise à disposition du fourrage (3) ;
- positionnement respectif du fourrage (3) et d'une partie de pâtisserie supérieure (1) ;
- dépôt d'une substance supplémentaire (5) sur la face supérieure du fourrage (3) ;
- transfert de la partie de pâtisserie supérieure (1) ;
- serrage de la partie de pâtisserie supérieure (1) sur la substance supplémentaire (5) et le fourrage (3) ;
- positionnement d'une partie de pâtisserie inférieure (2) ;
- dépôt d'une substance supplémentaire (6) sur la face supérieure de la partie de pâtisserie inférieure (2) ;
- placement de la partie de pâtisserie supérieure (1) et du fourrage (3) fixé à celle-ci sur la partie de pâtisserie inférieure (2) ;
- serrage de la partie de pâtisserie supérieure (1) et du fourrage (3) sur la substance supplémentaire (6) et sur la partie de pâtisserie inférieure (2).

2. Procédé selon la revendication 1, **caractérisé en ce que** le fourrage (3) est réalisé par coulage d'une pâte de fourrage dans un moule plat.

3. Procédé selon la revendication 2, **caractérisé en ce que** le moule positionne le fourrage (3) pour le dépôt de la substance supplémentaire (5) et pour la mise en place de la partie de pâtisserie supérieure (1).

4. Procédé selon l'une des revendications 1 à 3, **caractérisé en ce que** pour le positionnement, la partie de pâtisserie supérieure (1) est placée dans un premier moule de positionnement pourvu d'au moins un creux.

5. Procédé selon la revendication 4, **caractérisé en ce que** la forme et la position correctes de la partie de pâtisserie supérieure (1) dans le premier moule de positionnement sont déterminées.

6. Procédé selon l'une des revendications 1 à 5, **caractérisé en ce que** le dépôt de la substance supplémentaire (5) est effectué dans un creux (7) sur la face supérieure du fourrage (3).

7. Procédé selon la revendication 6, **caractérisé en ce que** le creux (7) est réalisé par vibration de la pâte de fourrage lors de la cristallisation, du refroidissement et/ou du durcissement par la formation d'un bord vibrant (11).

8. Procédé selon la revendication 6 ou 7, **caractérisé en ce que** la substance supplémentaire (5) est placée sur le fourrage (3) sous la forme de points collants.

9. Procédé selon l'une des revendications 1 à 8, **caractérisé en ce que** pour le positionnement, la partie de pâtisserie inférieure (2) est placée dans un deuxième moule de positionnement pourvu d'au moins un creux.

10. Procédé selon la revendication 9, **caractérisé en ce que** la forme et la position correctes de la partie de pâtisserie inférieure (2) dans le deuxième moule de positionnement sont déterminées.

11. Procédé selon la revendication 1 à 10, **caractérisé en ce que** la substance supplémentaire (6) est placée sur la partie de pâtisserie inférieure (2) sous la forme de points collants.

12. Dispositif pour produire une pâtisserie durable du type sandwich, comprenant une partie de pâtisserie supérieure (1) et une partie de pâtisserie inférieure (2) respectivement pour l'essentiel en forme de plaque, et un fourrage (3) en forme de plaque fixé entre celles-ci, **caractérisé par** :
- un équipement comprenant un moule pour couler le fourrage (3) ;
- un dispositif de préparation et de dosage pour la pâte de fourrage ;
- un équipement pourvu d'un premier moule de positionnement pour recevoir et positionner une partie de pâtisserie supérieure (1) ;
- un dispositif pour déposer une substance supplémentaire (5) sur le fourrage (3) ;
- un dispositif de transfert (13) pour saisir, transporter, placer et serrer la partie de pâtisserie supérieure (1) ;
- un équipement pourvu d'un deuxième moule de positionnement pour recevoir et positionner une partie de pâtisserie inférieure (2) ;
- un dispositif pour déposer une substance supplémentaire (6) sur la partie de pâtisserie inférieure (2) ;
- un dispositif de transfert (13) pour saisir, transporter, placer et serrer la partie de pâtisserie supérieure (1) ainsi que le fourrage (3) sur la partie de pâtisserie inférieure (2).

13. Dispositif selon la revendications 12, **caractérisé en ce que** le dispositif de transfert (13) comprend un préhenseur pneumatique.

14. Dispositif selon la revendication 13, **caractérisé en ce que** le préhenseur pneumatique peut être alimentée en dépression pour saisir et soulever la partie de pâtisserie (1, 2) et en surpression pour serrer la partie de pâtisserie (1, 2) déposée.

15. Dispositif selon l'une des revendications 12 à 14, **caractérisé en ce que** le dispositif de transfert (13) comprend un mécanisme réducteur mécanique.

16. Dispositif selon la revendication 15, **caractérisé en ce que** le mécanisme réducteur présente une trajectoire de mouvement sinusoïdale.

17. Dispositif selon l'une des revendications 12 bis 14, **caractérisé en ce que** le dispositif de transfert (13) comprend des transporteurs linéaires électroniques.

18. Dispositif selon l'une des revendications 12 à 17, **caractérisé en ce que** pour corriger la position de la partie de pâtisserie (1, 2), le dispositif de transfert (13) comprend des moyens pour un déplacement horizontal et/ou pour une rotation autour d'un axe vertical.

19. Dispositif selon l'une des revendications 12 à 18, **caractérisé en ce que** le dispositif de transfert (13) présente une précision comprise entre 0,1 et 0,3 mm.

20. Dispositif selon l'une des revendications 12 à 19, **caractérisé en ce que** le dispositif de transfert (13) présente une course de déplacement ou de transport allant jusqu'à un mètre.

21. Dispositif selon l'une des revendications 12 à 20, **caractérisé en ce que** le moule de positionnement est pourvu d'un appareil optique pour identifier la position et vérifier la géométrie de la partie de pâtisserie (1, 2).

22. Dispositif selon l'une des revendications 12 à 21, **caractérisé en ce que** le moule de positionnement est réalisé en matière plastique transparente.

23. Dispositif selon l'une des revendications 12 à 22, **caractérisé en ce que** le moule pour couler le fourrage (3) est réalisé en matière plastique.

24. Dispositif selon la revendication 23, **caractérisé en ce que** le moule pour couler de fourrage (3) est déformable pour le démoulage de celui-ci.

25. Dispositif selon l'une des revendications 12 à 24, **caractérisé en ce que** le moule pour couler le fourrage (3) et le moule de positionnement sont réalisés avec des tolérances comprises entre 0,1 et 0,3 mm.
